# EUROPEAN PATENT APPLICATION

(11) **EP 2 471 962 A1**
(43) Date of publication of application: **04.07.2012**
(21) Application number: 10841098.6
(22) Date of filing: 25.06.2010
(51) Int. Cl.: C22B 7/02

(54) **METHOD FOR RECOVERING VALUABLE METALS FROM SLAG**

(30) Priority: 30.12.2009 KR 20090133771
(71) Applicant: Hyundai Steel Company, Incheon 401-040 (KR)
(72) Inventor: KI, Joonseong, Incheon 401-070 (KR); HWANG, Jinill, Incheon 404-180 (KR)
(74) Representative: Michalski, Stefan
(86) International application number: PCT/KR2010/004127
(87) International publication number: WO 2011/081265

(57) **Abstract**

The present invention relates to a method of recovering a valuable metal from slag. The method includes the steps of: applying a magnetic field whose magnitude is increased in a stepwise fashion to crushed slag to separate a magnetic material from the crushed slag; and introducing a reductant into the separated magnetic material to recover a valuable metal therefrom. The method is advantageous and cost effective because the recovery rate of iron (Fe) from slag exceeds 50% by using a magnetic field, thus reducing the amount of slag to be wasted.

## Description

### Technical Field

The present invention relates to methods of recovering valuable metals from slags, and more particularly, to methods of recovering valuable metals from slags produced in a converter or an electric furnace by utilizing their magnetic properties.

### Background Art

Slag is a by-product of the steel refining process. Slag is formed from iron ore or coke in an iron-making process, and is formed from oxides produced by the oxidation and deoxidation of molten iron or molten steel or from auxiliary materials used for smelting in a steel-making process.

Slag basically contains SiO₂ and CaO, and may also contain Al₂O₃, FeO, MgO, P₂O₅, CaS and the like depending on the type of refining.

Slag produced in an iron-making process contains CaO, SiO₂, and Al₂O₃, and slag produced from the oxidation of molten iron or molten steel in a steel-making process basically contains CaO, SiO₂, and FeO.

### Disclosure

### Technical Problem

An object of the present invention is to provide an efficient method of recovering a metal such as iron and the like from slags, which are by-products of steel-refining process, by utilizing the magnetic properties of the slags.

### Technical Solution

In order to accomplish the above object, an embodiment of the present invention provides a method of recovering a valuable metal from slag, the method comprising steps of: applying a magnetic field whose magnitude is increased in a stepwise fashion, to crushed slag to separate a magnetic material from the crushed slag; and introducing a reductant into the separated magnetic material to recover a valuable metal therefrom.

Another embodiment of the present invention provides a method of recovering a valuable metal from slag, the method comprising steps of: transferring molten slag produced in a converter or an electric furnace into a slag pot and introducing a reductant into the slag pot to recover a valuable metal from the molten slag; cooling the molten slag, to form a solid slag and crushing the solid slag; applying a magnetic field, whose magnitude is increased in a stepwise fashion, to crushed slag to separate magnetic materials from the crushed solid slag; and introducing a reductant into the separated magnetic material to recover a valuable metal therefrom.

The magnetic material may contain Fe, FeO, Fe₂O₃, and Fe₃O₄.

The applied magnetic field may be in the range between 100 G and 1000 G.

The reductant may be at least one material selected from carbon (C), aluminum (Al), silicon (Si), sodium (Na), calcium (Ca), magnesium (Mg), and carbon monoxide (CO) gas.

The crushed slag may have a particle size of 100 mm or less.

The molten slag may be cooled at a cooling rate of 5 - 50°C/sec.

### Advantageous Effects

According to the present invention, iron (Fe), which is a valuable metal, can be recovered from slag by applying magnetic fields to the crushed slag and sequentially separating Fe, FeO, Fe₂O₃ and Fe₃O₄ from the crushed slag. The present invention is advantageous in that valuable metals can be efficiently recovered from slag which may otherwise be wasted.

Particularly, since the iron (Fe) recovered from slag has a purity of 95% or more, it can be reused as a raw material for making steel. Therefore, the present invention is advantageous in that it is cost-effective and environment-friendly.

### Embodiments

Hereinafter, preferred embodiments of the present invention will be described in detail.

In the method of recovering valuable metals from slag according to an embodiment of the present invention, a magnetic field, whose magnitude is increased in a stepwise fashion, is applied to crushed slag to separate magnetic materials from the slag, and subsequently a reductant is introduced into the magnetic materials to recover valuable metals therefrom.

The slag produced from a converter or an electric furnace contains a large amount of valuable metal oxides, such as FeO and the like.

The chemical composition of the slag obtained in a steel-making process is given in Table 1 below.

**□Table 1□**

| | | | | | | (Unit: wt%) | | | |
|---|---|---|---|---|---|---|---|---|---|
| Class. | SiO₂ | Al₂O₃ | T.Fe | CaO | MgO | MnO | P₂O₅ | T/S | CaO/SiO₂ |
| Meltdown in electric furnace | 18.30 | 11.11 | 22.36 | 20.12 | 8.41 | 5.81 | 0.241 | 0.123 | 1.11 |
| End of oxidation refining in electric furnace | 19.29 | 11.39 | 19.02 | 22.12 | 8.61 | 6.28 | 0.213 | 0.100 | 1.14 |
| Arrive at LF | 26.59 | 8.03 | 1.88 | 37.95 | 16.18 | 4.64 | 0.033 | 0.332 | 1.44 |
| Discharged from LF | 26.44 | 6.92 | 0.58 | 48.05 | 13.18 | 0.84 | 0.024 | 0.785 | 1.83 |

Slag produced in a converter or an electric furnace in a steel-making process may contain 20% or more of valuable metal oxides, and in particular, slag initially produced in an electric furnace contain 30% or more of valuable metal oxides.

Nevertheless, to date, slag has been buried in the ground or has been used as low value-added products such as roadbed materials and the like because of the difficulty of independent reuse.

The present invention provides a method of recovering valuable metals from slag produced in a converter, an electric furnace, or similar systems.

For the convenience of explanation, methods of recovering valuable metals from slag will be described with reference to the slag produced in an electric furnace.

Subsequent to oxidation refining process, and prior to transferring slag into a slag pot for reduction, electric current is stopped by lifting up the electrodes. Slag is transferred into a slag pot by tilting an electric furnace or opening a door of the electric furnace.

During reduction refining, the relative amount of metal oxides in the slag decreases and as a result the viscosity of slag decreases. Because slag having a low viscosity is difficult to transfer, it is important to determine the appropriate time to transfer the slag.

The slag transferred into the slag pot is then water-cooled or air-cooled to convert it into a solid slag. The solid slag is subsequently crushed into small particles.

While smaller the particle size of the crushed slag the easier it is to magnetically separate, the desired final particle size can be determined based on the cost of production. Subsequent to crushing, magnetic field, whose magnitude is increased in a stepwise fashion, is applied to the crushed slag. The applied magnetic field is in a range of 100 G to 1000 G, where G symbolizes gauss, which is a unit representing the intensity of a magnetic field.

The magnetic field may be applied to sequentially separate magnetic materials such as Fe, FeO, Fe₂O₃, and Fe₃O₄ from the slag.

Fe may be separated under a magnetic field of 100 G. Metal compounds such as FeO, Fe₂O₃ and Fe₃O₄ may be sequentially separated by gradually increasing the magnitude of the applied magnetic field. However, as the intensity of the magnetic field is increased further, other compounds such as CaAl₂SiO₇, CaMgSiO₄ and the like may also be separated in addition to the above-mentioned magnetic materials, thus lowering the quality of the separated magnetic materials. For this reason, it is preferred that the maximum intensity of the magnetic field to not exceed 1000 G. Correspondingly, 100 G represents the approximate minimum magnetic field intensity at which magnetic materials may be preferably separated.

Where the particle size of the separated magnetic materials is 100 mm or less, there is no significant difficulty in separating magnetic materials even when nonmagnetic materials are mixed with the magnetic materials.

The separated magnetic materials (Fe, FeO, Fe₂O₃, Fe₃O₄) are subsequently melted, and a reductant is introduced into the molten magnetic materials to recovering the valuable metal such as Fe. The reductant may be at least one material selected from carbon (C), aluminum (Al), silicon (Si), sodium (Na), calcium (Ca), magnesium (Mg), and carbon monoxide (CO) gas. The reductant may be introduced using a carrier gas (e.g., air).

Aluminum (Al) may be introduced at a feed rate of 10 ∼ 50 kg per 1 ton of slag. The amount of aluminum (Al) to be introduced is determined based on the targeted recovery rate of 50∼100%, depending on operating conditions.

The amount of aluminum (Al) to be introduced may be calculated based on the following reaction formula:

3FeO + 2Al → 3Fe + Al₂O₃ (ΔH =-187.1 kcal)

Further, in the case of a molten magnetic material (Fe₂O₃), the input of aluminum (Al) can be calculated by the following Reaction Formula:

Fe₂O₃ + 2Al → 2Fe + Al₂O₃

Hereinafter, a method of recovering valuable metals form slag according to another embodiment of the present invention will be described.

The method of this embodiment addresses a problem that is encountered when a slag has high iron (Fe) content, in which case the slag cannot be easily crushed because of its high strength and malleability even when the particles are coarse.

In this embodiment, the molten slag produced in a converter or an electric furnace is transferred into a slag pot, followed by introduction of a reductant into the slag pot to separate valuable metals from the molten slag. The remaining molten slag is subsequently cooled into a solid slag, which is then crushed.

Subsequently, a magnetic field, whose intensity is increased in a stepwise fashion, is applied to the crushed slag to separate magnetic materials therefrom. Then, a reductant is introduced into the separated magnetic materials to recover valuable metals therefrom.

The reductant introduced into the slag pot serves to reduce iron oxides in the molten slag.

Carbon (C) and aluminum (Al), whose affinity for oxygen is high, may be used as reductants. Carbon (C) is supplied into the slag pot, and aluminum (Al) is directly introduced into the molten slag in the slag pot. Aluminum (Al) may be introduced together with a gas in order to enhance the reaction. The gas may be air or inert gas such as nitrogen or argon.

Because the inner walls of the slag pot are made of a copper plate or iron plate having high thermal conductivity, Carbon (C) and aluminum (Al) are both used for reducing iron (Fe) oxides.

It is advantageous to perform the reduction of iron (Fe) oxides in the molten slag to iron (Fe) when the temperature of the molten slag is high and the reaction rate is high. However, since the reduction reaction of iron (Fe) oxides to iron (Fe) by carbon (C) is an endothermic reaction, the temperature of the molten slag is lowered.

The temperature of the molten slag as transferred into the slag pot is about 1600°C. However, the temperature drops at a rate of 200 ∼ 300 °C /hr as a result of the endothermic reduction reaction of iron (Fe) oxides to iron (Fe) by carbon (C), heat dissipation, and other processes.

Aluminum (Al) is introduced in order to maintain the molten slag at high temperature. The reduction reaction of iron (Fe) oxides to iron (Fe) by aluminum (Al) is represented by the reaction formula: 3FeO + 2Al → 3Fe + Al₂O₃ (ΔH =-187.1 kcal). This reduction reaction is an exothermic reaction. This reduction reaction is referred to as "thermit reaction" because iron oxide (FeO) is reduced into iron (Fe) while heat is simultaneously generated.

The amount of aluminum (Al) introduced into the molten slag is controlled so that the temperature of the molten slag is maintained at 1300 ∼ 1600°C. It is advantageous to perform the reduction of iron oxide (FeO) to iron (Fe) is when the temperature of molten slag is high. However, when the temperature of the molten slag is greater than 1600°C, the slag pot may be excessively corroded. On the other hand, when the temperature is less than 1300°C, the reduction reaction of iron oxide (FeO) to iron (Fe) is rapidly decelerated.

Specifically, when the molten slag produced in the electric furnace is transferred to the slag pot, carbon (C), which is supplied through holes on the slag pot, serves as a reductant, and the reduction reaction represented by FeO + C → Fe + CO is conducted.

As a result, the temperature of the molten slag can be lowered. However, by subsequently introducing aluminum (Al), the temperature of the molten slag may be maintained at high temperature, aided by the exothermic reaction represented by 3FeO + 2Al → 3Fe + Al₂O₃ (ΔH =-187.1 kcal), which accelerates the reduction reaction.

Aluminum (Al) may be introduced at a feed rate of 10 ∼ 50 kg per 1 ton of slag in order to maintain the temperature of the molten slag at 1300 ∼ 1600°C.

The amount of aluminum (Al) to be introduced is determined based on the targeted recovery rate of 50∼100%, depending on operating conditions.

The content of FeO in the molten slag, whose amount is necessary for introduction of a reductant, may be measured using a spectrometer or a wet process.

When the reduction reaction is completed, iron (Fe) having a high specific gravity is located at the lower portion of the slag pot, and the molten slag is located at the upper portion thereof. The molten slag located at the upper portion of the slag pot is transferred into an additional pot, and the iron (Fe) remaining in the slag pot is recovered.

Accordingly, iron (Fe), which is difficult to crush, may be recovered at a high recovery rate of 20% of the weight of slag.

Thereafter, the molten slag transferred into the additional pot is cooled to make a porous solid slag. Porous solid slag can be easily crushed without relatively high force because it has a low iron (Fe) content.

The cooling of the molten slag may be conducted by injecting a mixture of steam and gas into the molten slag. Air may be used as the gas.

When the mixture of steam and gas is injected into the molten slag whose specific gravity and melting point have become low, the molten slag is cooled with bubbles formed therein, and thus the molten slag is made into a porous solid slag.

Steam is injected in order to cool the molten slag, and gas is injected in order to allow the steam to be sprayed into molten slag. Steam has high cooling efficiency because it lowers the temperature of the molten slag and simultaneously maintains low expansibility. For reference, water must not be used to cool high-temperature molten slag because water has high expansibility and creates a danger of explosion.

The molten slag may be cooled to room temperature at a cooling rate of 1 ∼ 50 °C /sec. The cooling rate of the molten slag has the maximum value or the minimum value depending on the injection rate of gas at room-temperature and the steam and the pressure control thereof. The shape, strength, and the texture of the solid slag are influenced by this cooling rate.

Therefore, the injection rate and pressure of room-temperature gas and steam is controlled so that the cooling rate of the molten slag is maintained at 5 - 50 °C/sec. The control of the cooling rate thereof is conducted in order to increase the crushing efficiency of the solid slag. When the cooling rate is 5°C /sec, the average particle size of solid slag may be 50 mm or less, whose value indicates that the crushing efficiency is high. Further, the maximum value of the cooling rate is applied depending on the injection rate of room-temperature gas and steam and the pressure control thereof.

After the molten slag is cooled into a porous solid slag, the porous solid slag is crushed. The porous solid slag is easily crushed because it has a low valuable metal (Fe) content and has a porous structure.

The average particle size of the crushed solid slag is 50 mm or less, which is uniform.

Only solid slag particles having a particle size 100 mm or less are separated from the crushed solid slag, upon which a magnetic field is applied which in a stepwise fashion. The magnetic fields are applied in a range of 100 ∼ 1000 G (gauss).

The magnetic materials included in slag, such as Fe, FeO, Fe₂O₃ and Fe₃O₄, are sequentially separated depending on the intensity of the magnetic field. When the particle size of the separated magnetic materials is 100 mm or less, there is no difficulty separating the magnetic materials even when nonmagnetic materials are mixed with the magnetic materials.

A reductant is introduced into the separated magnetic materials (Fe, FeO, Fe₂O₃, Fe₃O₄) to recover valuable metals such as iron (Fe). The reductant may be at least one material selected from carbon, aluminum (Al), silicon (Si), sodium (Na), calcium (Ca), magnesium (Mg), and carbon monoxide (CO) gas.

The above-mentioned method may be similarly applied to the slag discharged from a converter.

The following Table 2 shows the recovery rates of iron (Fe) using the method of recovering valuable metals from slag.

**□Table 2□**

| Class. | Slag Weight | Content of FeO in slag by weight | Fe recovering method | Fe recovery rate | Fe purity | Remarks |
|---|---|---|---|---|---|---|
| 1 | 1 ton | 100 kg | crushing (100 mm) + stepwisely applying magnetic fields(100 ∼ 340G) | 62% | 96% | Invention Example |
| 2 | 1 ton | 100 kg | Crushing (100 mm) + applying magnetic field(100G) | 17% | 98% | Comparative Example |
| 3 | 1 ton | 100 kg | crushing (100 mm) + applying magnetic field (90G) | 0% | 0% | Comparative Example |
| 4 | 1 ton | 100 kg | crushing (100 mm) + stepwisely applying magnetic fields (100 ∼ 2000 G) | 60% | 72% | Comparative Example |
| 5 | 1 ton | 100 kg | Reducing | 21% | 99% | Comparative Example |
| 6 | 1 ton | 100 kg | Reducing + cooling + crashing + applying magnetic field | 78% | 97% | Invention Example |

From Table 2, it can be ascertained that the recovery rate of a valuable metal (Fe) is greater than 50% when magnetic fields, which are increased in a stepwise fashion, are applied to the crushed slag.

However, when the intensity of a magnetic field exceeds 1000G, the purity of Fe becomes low. An inferred reason is because compounds, such as CaAl₂SiO₇, CaMgSiO₄ and the like, may increasingly be mixed-in with the magnetic materials. On the other hand, when the intensity thereof is less than 100 G, no Fe may be recovered.

Further, when Fe is first recovered from molten slag by reduction, followed by further recovery from the remaining molten slag by cooling into a porous solid slag, and subsequently applying a stepwise magnetic field to crushed porous solid slag, it may be inferred that the recovery rate of a valuable metal (Fe) is further increased.

In conclusion, it is inferred that valuable metals included in waste slag can be efficiently recovered when magnetic fields are used.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of recovering a valuable metal from slag, the method comprising:
applying magnetic field whose intensity is increased in a stepwise fashion, to crushed slag to separate a magnetic material from the crushed slag; and
introducing a reductant into the separated magnetic material to recover a valuable metal therefrom.

2. A method of recovering a valuable metal from slag, the method comprising:
transferring molten slag produced in a converter or an electric furnace into a slag pot before reduction and introducing a reductant into the slag pot to recover a valuable metal from the molten slag;
cooling the molten slag to form a solid slag and then crushing the solid slag;
applying a magnetic field whose intensity is increased in a stepwise fashion, to crushed slag to separate a magnetic material from the crushed solid slag; and
introducing a reductant into the separated magnetic material to recover a valuable metal therefrom.

3. The method of recovering a valuable metal from slag according to claim 1 or 2, wherein the magnetic material includes Fe, FeO, Fe₂O₃, and Fe₃O₄.

4. The method of recovering a valuable metal from slag according to claim 1 or 2, wherein the magnetic field ranges from 100 G to 1000 G.

5. The method of recovering a valuable metal from slag according to claim 1 or 2, wherein the reductant is at least one selected from carbon (C), aluminum (Al), silicon (Si), sodium (Na), calcium (Ca), magnesium (Mg), carbon monoxide (CO) gas.

6. The method of recovering a valuable metal from slag according to claim 1 or 2, wherein the crushed slag has a particle size of 100 mm or less.

7. The method of recovering a valuable metal from slag according to claim 2, wherein the molten slag is cooled at a cooling rate of 5 - 50°C / sec.
